(19) Europäisches Patentamt
European Patent Office
Office européen des brevets

(11) **EP 3 497 252 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **17757486.0**

(22) Anmeldetag: **10.08.2017**

(51) Internationale Patentklassifikation (IPC):
**C21D 8/02** *(2006.01)* **B32B 15/01** *(2006.01)*
**C21D 8/04** *(2006.01)*

(52) Gemeinsame Patentklassifikation (CPC):
**C21D 8/0226; B32B 15/01; B32B 15/015; C21D 8/0426; C22C 19/055;** B23K 20/04; C21D 2251/02

(86) Internationale Anmeldenummer:
**PCT/EP2017/070347**

(87) Internationale Veröffentlichungsnummer:
**WO 2018/029305 (15.02.2018 Gazette 2018/07)**

(54) **VERFAHREN ZUR HERSTELLUNG VON WALZPLATTIERTEN BLECHEN**

METHOD FOR PRODUCING ROLL-BONDED METAL SHEETS

PROCÉDÉ DE FABRICATION DE TÔLES PLAQUÉES PAR LAMINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2016 DE 102016115026**

(43) Veröffentlichungstag der Anmeldung:
**19.06.2019 Patentblatt 2019/25**

(73) Patentinhaber:
• **Voestalpine Grobblech GmbH**
  **4020 Linz (AT)**
• **VDM Metals International GmbH**
  **58791 Werdohl (DE)**

(72) Erfinder:
• **WINTER, Franz**
  **4020 Linz (AT)**
• **SCHINDLER, Claudius**
  **3950 Gmünd (AT)**
• **WAHLERS, Franz-Josef**
  **44534 Lünen (DE)**
• **KLOEWER, Jutta**
  **40547 Düsseldorf (DE)**
• **GEHRMANN, Bodo**
  **58840 Plettenberg (DE)**
• **HATTENDORF, Heike**
  **58791 Werdohl (DE)**

(74) Vertreter: **Lambsdorff & Lange Patentanwälte Partnerschaft mbB**
**Grillparzerstraße 12A**
**81675 München (DE)**

(56) Entgegenhaltungen:
EP-A1- 0 315 576    EP-A2- 0 320 773
EP-A2- 0 488 222    DE-A1- 4 409 004
JP-A- H05 214 446    US-A- 4 178 417

**Beschreibung**

Die Erfindung betrifft walzplattierte Bleche sowie ein Verfahren zur Herstellung von walzplattierten Blechen. Walzplattierte Bleche kommen zum Beispiel in Bereichen der Technik zum Einsatz, in denen eine hohe Korrosionsbeständigkeit gegenüber chemisch aggressiven Umgebungsmedien wie beispielsweise Seewasser, Erdöl, Erdgas, säure oder chlorhaltige Umgebungsmedien usw. über einen gegebenenfalls weiten thermischen Bereich gefordert ist. Beispielsweise werden walzplattierte Bleche für Line Pipes, insbesondere Onshore und Offshore Line Pipes oder auch im Druckkesselbau eingesetzt. Neben der Einhaltung der geforderten Korrosionsbeständigkeit und der Festigkeit ist für viele Anwendungen von walzplattierten Blechen eine hohe Zähigkeit der Bleche auch noch bei tiefen Temperaturen sowie eine gute Schweißeignung von großer praktischer Bedeutung.

Beim Walzplattieren werden wenigstens eine metallische Grundwerkstoffschicht und wenigstens eine metallische Auflagewerkstoffschicht zusammengebracht und es wird durch Walzen bei erhöhter Temperatur eine metallurgische Bindung zwischen den einzelnen Schichten erzeugt. Dabei entsteht ein metallischer Verbundwerkstoff, der als walzplattiertes Blech bezeichnet wird. Während der Grundwerkstoff üblicherweise die Aufgabe hat, die statischen und dynamischen Lasten aufzunehmen, schützt der Auflagewerkstoff den Grundwerkstoff vor korrosivem Angriff.

Aus WO 2011/079341 A2 ist es bereits bekannt, ein Grobblech zwischen Teil- und Endumformen beschleunigt auf eine Temperatur unter Ar3 abzukühlen und anschließend induktiv auf über Ac3 zu erwärmen.

EP 0 320 773 A2 offenbart ein Verfahren zur Herstellung von plattiertem Warmband, bei dem eine Stahlbramme mit einer Auflage aus einem korrosionsbeständigen Werkstoff versehen und der entstandene Verbundkörper anschließend warmgewalzt wird. Als Stahlbramme wird ein niedriglegierter Stahl eingesetzt, als Auflagewerkstoff kommen Knetlegierungen auf Nickel-Basis zum Einsatz.

DE 44 09 004 A1 beschreibt einen Mehrschichtverbundwerkstoff bestehend aus einer Nickel-Basislegierung und einem hitzebeständigen Edelstahl.

Eine Zielsetzung im Bereich der Technik besteht darin, walzplattierte Bleche mit einer hohen Zähigkeit herzustellen. Insbesondere sollen walzplattierte Bleche mit einem metallischen Grundwerkstoff der Norm API 5L oder vergleichbarer Normen wie z.B. DNV OS-F101, ISO 3183, etc. mit verbesserter Zähigkeit bei derselben Temperatur oder derselben Zähigkeit bei einer vergleichsweise tieferen Temperatur erzeugt werden.

Die Aufgabenstellung wird durch die Merkmale der unabhängigen Ansprüche 1 und 8 gelöst. Ausführungsformen und Weiterbildungen sind Gegenstand der Unteransprüche.

Demnach umfasst ein Verfahren zur Herstellung eines walzplattierten Bleches ein Zusammenbringen einer metallischen Grundwerkstoffschicht und einer metallischen Auflagewerkstoffschicht zur Erzeugung eines Schichtpaketes; ein Erwärmen des Schichtpaketes; ein thermomechanisches Walzen des erwärmten Schichtpaketes, welches eine erste Walzphase zum Vorwalzen des erwärmten Schichtpaketes unter Ausbildung einer metallurgischen Bindung zwischen der metallischen Grundwerkstoffschicht und der metallischen Auflagewerkstoffschicht, eine zweite Walzphase zum Endumformen des Schichtpaketes sowie eine zwischen der ersten Walzphase und der zweiten Walzphase liegende Abkühlzeitdauer umfasst; wobei der Grundwerkstoff ein Kohlenstoffstahl ist und der Auflagewerkstoff ein Nickelbasiswerkstoff ist, dessen chemische Zusammensetzung in Masse-% einen Anteil gemäß den Angaben des Anspruchs 1 aufweist, und die Walzendtemperatur der zweiten Walzphase auf einen Wert gleich oder kleiner als 880°C, insbesondere 850°C eingestellt ist.

Durch die Einstellung eines niedrigen Nb-Gehaltes des Auflagewerkstoffes wird erreicht, dass bei einer thermomechanischen Walzung mit einer Walzendtemperatur der zweiten Walzphase von gleich oder kleiner als 880°C, insbesondere 850°C (noch) keine Schwächung oder Zerstörung der metallurgischen Bindung zwischen dem Auflagewerkstoff und dem Grundwerkstoff auftritt. Infolge der niedrigen Walzendtemperatur erhält der Grundwerkstoff des walzplattierten Bleches sehr gute (d.h. verbesserte) Zähigkeitseigenschaften.

Erfindungsgemäß wird somit die gewünschte Verbesserung der Zähigkeit des Grundwerkstoffes des walzplattierten Bleches durch eine Maßnahmen erreicht, die nicht am Grundwerkstoff selber, sondern am Auflagewerkstoff sowie der Verfahrensführung der thermomechanischen Walzung ansetzen. Zwar hat die chemische Zusammensetzung des Auflagewerkstoffes keine direkte Auswirkung auf die Zähigkeit des Grundwerkstoffes des walzplattierten Bleches. Jedoch wird durch die Einstellung eines niedrigen Nb-Gehaltes des Auflagewerkstoffes erreicht, dass die Fließspannung des Auflagewerkstoffes im Vergleich zu der Fließspannung eines Auflagewerkstoffes mit höherem Nb-Gehalt und ansonsten entsprechender chemischer Zusammensetzung reduziert wird. Dadurch wird die Fließspannung des Auflagewerkstoffes der (kleineren) Fließspannung des Grundwerkstoffes angenähert. Durch die geringere Differenz der Fließspannungen der beiden Werkstoffe kann ein Fertigwalzen (d.h. das Endumformen in der zweiten Walzphase) des Schichtpaketes bei den genannten tieferen Temperaturen durchgeführt werden, ohne dass die metallurgische Bindung zwischen den Werkstoffen zerstört wird. Da die niedrigere Walzendtemperatur wie erwähnt zu verbesserten Zähigkeitseigenschaften des Grundwerkstoffes führt, wird durch die Veränderung der chemischen Zusammensetzung des Auflagewerkstoffes "indirekt" eine mechanische Eigenschaft (Zähigkeit) des Grundwerkstoffes verbessert. Gegebenenfalls kann die Walzendtemperatur der zweiten Walzphase gleich oder kleiner als 830°C eingestellt werden. Dies bewirkt, dass der Grundwerkstoff des walzplattierten Bleches weiter verbesserte Zähigkeitseigenschaften erhält. Die Walzendtemperatur kann geringer, bevorzugt mindestens 10°C geringer als die Rekristallisationsstopptemperatur der metallischen Grundwerkstoffschicht sein.

Zweckmäßigerweise kann die chemische Zusammensetzung des Auflagewerkstoffes in Masse-% einen Anteil Nb ≤ 2,5% oder 2,2% oder 2,0%, insbesondere Nb + Ta ≤ 2,5% oder 2,2% oder 2,0% aufweisen. Geringere Nb-Gehalte des Auflagewerkstoffes ermöglichen ein weiteres Absenken der Walzendtemperatur der zweiten Walzphase und damit verbesserte Zähigkeitseigenschaften des Grundwerkstoffes (und somit auch des walzplattierten Bleches).

Bei dem Auflagewerkstoff handelt es sich um eine Nickelbasislegierung handeln, d.h. der Hauptbestandteil der Legierung ist Nickel. Insbesondere kann der Auflagewerkstoff eine Nickel-Chrom-Molybdän-Niob-Legierung sein.

Eine gängige Nickelbasislegierung ist VDM® Alloy 625 mit der Werkstoffnummer 2.4856 - NiCr22Mo9Nb im EN Standard. Entsprechende Nickelbasislegierungen werden in Standard ISO als ISO NC22DNb, im Standard UNS als UNS N06625, im Standard AFNOR als NC22DNb und ferner beispielweise im Standard API als LC2262 bezeichnet.

Insbesondere kann der Auflagewerkstoff in Masse-% eine chemische Zusammensetzung mit 58% ≤ Ni ≤ 73%, 20% ≤ Cr ≤ 25%, 0% ≤ Fe ≤ 5%, 0% ≤ C ≤ 0,03% oder 0,1%, 0% ≤ Mn ≤ 0,5%, 0% ≤ Si ≤ 0,5%, 0% ≤ Co ≤ 1%, 0% ≤ Al ≤ 0,4%, 0% ≤ Ti ≤ 0,4%, 0% ≤ P ≤ 0,015%, 0% ≤ S ≤ 0,015%, 8% ≤ Mo ≤ 10%, 1,5% ≤ Nb + Ta ≤ x, mit x = 2,8%, 2,5% oder 2,2%, der Rest Verunreinigungen, aufweisen.

Diese Zusammensetzung entspricht der Zusammensetzung des Alloy 625 mit UNS Nummer N06625 sowie im Wesentlichen der Werkstoffnummer im 2.4856 - NiCr22Mo9Nb im EN Standard, wobei jedoch statt der dort angegebenen 3,15% ≤ Nb + Ta ≤ 4,14 ein erfindungsgemäß reduzierter Nb- bzw. (Nb + Ta)-Gehalt verwendet wird. Außerdem wurde wie z.B. in ISO 6208 ein unterer und zusätzlich ein oberer Grenzwert für Nickel hinzugefügt, allerdings ist der obere Grenzwert für Ni (bei Alloy 625 im VDM Datenblatt: 71%) und/oder für Cr (bei Alloy 625 im VDM Datenblatt: 23%) jeweils um zwei Prozent erhöht, da die Verringerung des Nb- bzw. (Nb + Ta)-Gehaltes durch eine Erhöhung von zum Beispiel des Ni- und/oder Cr-Gehaltes substituiert werden kann, ohne die Korrosionseigenschaften des Auflagewerkstoffes zu beeinflussen.

Der Nb + Ta Gehalt liegt vorzugsweise zwischen 1,5% und 2,8 % Bedarfsweise kann der Nb + Ta Gehalt wie folgt weiter eingeschränkt werden (in Masse-%):

1,5% ≤ Nb + Ta ≤ 2,8%
1,5% ≤ Nb + Ta ≤ 2,5%
1,5% ≤ Nb + Ta ≤ 2,2%
1,7% ≤ Nb + Ta ≤ 2,3%.

Der Ni Gehalt liegt vorzugsweise zwischen 58% und 73%. Bevorzugt kann Ni wie folgt in der Legierung eingestellt werden (in Masse-%):

59% ≤ Ni ≤ 69%
60% ≤ Ni ≤ 69%.

Cr ist wie oben erwähnt wichtig für die Korrosionsbeständigkeit. Zu hohe Gehalte fördern die Bildung von unerwünschten Phasen. Der Cr-Gehalt liegt vorzugsweise zwischen 21% und 25%. Bevorzugt kann Cr wie folgt in der Legierung eingestellt werden (in Masse-%):
21% ≤ Cr ≤ 23%.

Der C Gehalt liegt vorzugsweise zwischen 0% und 0,1%. Höhere Gehalte reduzieren durch die Bildung von Chromkarbiden auf den Korngrenzen die Korrosionsbeständigkeit. Bevorzugt kann C wie folgt in der Legierung eingestellt werden (in Masse-%): 0% ≤ C ≤ 0,03%.

Der Mn Gehalt liegt vorzugsweise zwischen 0% und 0,5%. Bevorzugt kann Mn wie folgt in der Legierung eingestellt werden (in Masse-%):
0% ≤ Mn ≤ 0,3%.

Der Si Gehalt liegt vorzugsweise zwischen 0% und 0,5%. Zu hohe Gehalte fördern die Bildung von unerwünschten Phasen. Bevorzugt kann Si wie folgt in der Legierung eingestellt werden (in Masse-%):
0% ≤ Si ≤ 0,4%.

Der Co Gehalt liegt vorzugsweise zwischen 0% und 1%. Bevorzugt kann Co wie folgt in der Legierung eingestellt werden (in Masse-%):
0% ≤ Co ≤ 0,7%.

Der Al Gehalt liegt vorzugsweise zwischen 0% und 0,4%. Bevorzugt kann Al wie folgt in der Legierung eingestellt werden (in Masse-%):
0% ≤ Al ≤ 0,3%.

Der Ti Gehalt liegt vorzugsweise zwischen 0% und 0,4%. Bevorzugt kann Ti wie folgt in der Legierung eingestellt werden (in Masse-%):
0% $\leq$ Ti $\leq$ 0,3%.

Des Weiteren wird kann die Legierung Ta enthalten, das aber hohe Metallkosten verursacht. Deshalb wird in der Legierung der Gehalt an Ta vorzugsweise auf 0% $\leq$ Ta $\leq$ 1% beschränkt. Der Gehalt an Ta kann darüber hinaus wie folgt eingeschränkt werden (in Masse-%):

0% $\leq$ Ta $\leq$ 0,5%
0% $\leq$ Ta $\leq$ 0,2%.

Des Weiteren kann die Legierung bedarfsweise zwischen 0% und 0,008% Bor enthalten sein, um die Verarbeitbarkeit bei höheren Temperaturen zu verbessern. Höhere Gehalte beeinträchtigen die Schweißbarkeit.

Des Weiteren kann in der Legierung maximal 0,5% Cu enthalten sein. Der Gehalt an Cu kann darüber hinaus wie folgt eingeschränkt werden (in Masse-%):
Cu $\leq$ 0,3%.

Des Weiteren kann in der Legierung maximal 1% W enthalten sein. W verbessert wie Mo die Korrosionsbeständigkeit. Allerdings bewirkt W wie Mo auch einen hohe Mischkristallverfestigung und steht damit dem Ziel einer verringerten Fließspannung des Auflagewerkstoffes entgegen, weshalb der Gehalt an W vorzugsweise auf maximal 1% beschränkt ist. Der Gehalt an W kann darüber hinaus wie folgt eingeschränkt werden (in Masse-%):

W $\leq$ 0,50%
W $\leq$ 0,20%.

Des Weiteren kann in der Legierung maximal 0,5% V enthalten sein.

Des Weiteren kann in der Legierung maximal 0,05% N enthalten sein. N verbessert die Korrosionsbeständigkeit. Allerdings bewirkten Stickstoffzugaben auch eine Verfestigung und steht damit dem Ziel einer verringerten Fließspannung des Auflagewerkstoffes entgegen, weshalb der Gehalt an Stickstoff vorzugsweise auf maximal 0,05% beschränkt ist.

Das Element Mg kann in der Legierung in Gehalten von maximal 0,05% enthalten sein, um die Verarbeitbarkeit zu verbessern.

Das Element Ca kann in der Legierung in Gehalten von maximal 0,05% enthalten sein, um die Verarbeitbarkeit zu verbessern.

Schließlich können an Verunreinigungen noch die Elemente Blei, Zink und/oder Zinn in Gehalten wie folgt gegeben sein:

Pb $\leq$ 0,002%
Zn $\leq$ 0,002%
Sn $\leq$ 0,002%.

Höhere Gehalte beinträchtigen die Verarbeitbarkeit.

Bei dem Grundwerkstoff kann es sich vorzugsweise um einen Kohlenstoffstahl handeln. Insbesondere können Kohlenstoffstähle entsprechend einer oder mehrerer der Normen API 5L, insbesondere API 5L grade X65, DNV OS-F101, ISO 3183 oder vergleichbarer Normen Verwendung finden, insbesondere mit einer chemischen Zusammensetzung 0% $\leq$ C $\leq$ 0,3% und 0% $\leq$ Mn $\leq$ 1,65%. Beispielsweise kann der Grundwerkstoff ein Kohlenstoffstahl (API 5L grade X65) mit der chemischen Zusammensetzung in Masse-% 0% $\leq$ C $\leq$ 0,16%, 0% $\leq$ Si $\leq$ 0,50%, 1,10% $\leq$ Mn $\leq$ 1,65%, 0% $\leq$ P $\leq$ 0,022%, 0% $\leq$ S $\leq$ 0,010%, 0% $\leq$ Nb $\leq$ 0,05%, 0% $\leq$ Ti $\leq$ 0,06%, 0% $\leq$ V $\leq$ 0,10%, der Rest Eisen und Verunreinigungen, sein. Es kann sich bei dem Grundwerkstoff beispielsweise auch um Stähle nach API 5L grade X52, API 5L grade X56, API 5L grade X60, und API 5L grade X70 handeln.

Eine andere Angabe der Zusammensetzung eines API 5L grade X65 Stahles lautet bspw. 0% $\leq$ C $\leq$ 0,16%, 0% $\leq$ Si $\leq$ 0,50%, 1,10% $\leq$ Mn $\leq$ 1,60%, 0% $\leq$ P $\leq$ 0,022%, 0% $\leq$ S $\leq$ 0,005%, 0% $\leq$ Cr $\leq$ 0,50%, 0% $\leq$ Mo $\leq$ 0,20%, 0% $\leq$ Ni $\leq$ 0,20%, 0,020% $\leq$ Al $\leq$ 0,060%, 0% $\leq$ Cu $\leq$ 0,20%, 0% $\leq$ N $\leq$ 0,014%, 0% $\leq$ Nb $\leq$ 0,05%, 0% $\leq$ Ti $\leq$ 0,02%, 0% $\leq$ V $\leq$ 0,10%, 0% $\leq$ As $\leq$ 0,02%, 0% $\leq$ Sb $\leq$ 0,01%, 0% $\leq$ Sn $\leq$ 0,015%, 0% $\leq$ Pb $\leq$ 0,010%, 0% $\leq$ Bi $\leq$ 0,010%, 0% $\leq$ Ca $\leq$ 0,005%, 0% $\leq$ B $\leq$ 0,0005%, 0% $\leq$ Cr+Mo+Ni+Cu $\leq$ 0,5%, 0% $\leq$ Nb+V $\leq$ 0,10% und 0% $\leq$ Nb+V+Ti $\leq$ 0,15%, der Rest Eisen und Verunreinigungen, wobei ferner die Formeln CEV $\leq$ 0,43% und Pcm $\leq$ 0,25% erfüllt sind, mit CEV = C + Mn/6 + (Cr+Mo+V)/5 + (Ni+Cu)/15 und Pcm = C + Si/30 + (Mn+Cu+Cr)/20 + Ni/60 + Mo/15 +V/10 + 5B.

Das Walzen in der ersten Walzphase kann bei einer Anfangswalztemperatur von 1000°C bis 1200°C durchgeführt werden. Insbesondere in der ersten Walzphase werden die Schichten des Schichtpaketes über ihren gesamten Querschnitt homogenisiert und ihre Dicken werden reduziert. Außerdem wird eine metallurgische Bindung zwischen den Schichten geschaffen. Es werden hier noch nicht die mechanischen Eigenschaften des walzplattierten Bleches eingestellt.

Vorzugsweise wird die Abkühlzeitdauer mindestens so lange eingestellt, bis die Temperatur der metallischen Grundwerkstoffschicht die Rekristallisationsstopptemperatur des metallischen Grundwerkstoffes unterschritten hat, für spezielle Anwendungen kann die Abkühldauer jedoch auch derart reduziert werden, dass die zweite Walzphase bei einer Temperatur oberhalb der Rekristallisationsstopptemperatur beginnt. Je nach Dicke der Schichten und gegebenenfalls anderen Einflussgrößen (z.B. Kühlung) kann die Abkühlzeitdauer beispielsweise zwischen 3 bis 15 Minuten betragen, wobei größerer Dicken in der Regel längere Abkühlzeitdauern erforderlich machen. Der Abkühlprozess kann mittels einer kontinuierlichen Abkühlung durchgeführt werden, es ist aber auch möglich, dass ein Temperaturprofil mit zumindest einer zwischenzeitlichen Erwärmungsphase durchlaufen wird.

Die zweite Walzphase wird beispielsweise bei einer Anfangswalztemperatur von maximal 50°C, insbesondere 40°C oder 30°C über der Walzendtemperatur durchgeführt. Je größer die (bereits in der ersten Walzphase reduzierte) Dicke des Schichtpaketes ist, eine desto geringere Anfangswalztemperatur ist erforderlich. In Abhängigkeit von der Geometrie sowie den verfügbaren Walzmomenten und Walzkräften kann die zweite Walzphase sogar mit einer Anfangswalztemperatur unterhalb der gewünschten Walzendtemperatur begonnen werden.

Ein Ausführungsbeispiel betrifft ferner ein walzplattiertes Blech, aufweisend: eine metallische Grundwerkstoffschicht und eine metallische Auflagewerkstoffschicht, welche über eine metallurgische Bindung miteinander verbunden sind, wobei der Auflagewerkstoff ein Nickelbasiswerkstoff ist, dessen chemische Zusammensetzung in Masse-% einen Anteil von über 50% Ni sowie einen Anteil an Nb $\leq$ 2,8%, insbesondere Nb + Ta $\leq$ 2,8% aufweist, und erhältlich durch ein thermomechanisches Walzverfahren mit einer ersten Walzphase zum Vorwalzen, einer zweiten Walzphase zum Endumformen sowie einer zwischen der ersten Walzphase und der zweiten Walzphase liegenden Abkühlzeitdauer, wobei die Walzendtemperatur der zweiten Walzphase auf einen Wert gleich oder kleiner als 880°C, insbesondere 850°C eingestellt ist.

Das thermomechanische Walzverfahren kann somit zwei oder mehr als zwei Walzphasen umfassen, wobei die zwischen den einzelnen Walzphasen liegenden Zeiträume für zumindest eine beschleunigte Abkühlung und/oder Erwärmung des Bleches genützt werden können.

Die metallische Grundwerkstoffschicht des walzplattierten Bleches kann eine Dicke von gleich oder größer als 25 mm, insbesondere gleich oder größer als 30 oder 35 mm aufweisen. Da sich die Zähigkeitseigenschaften von über eine thermomechanische Walzung plattierten Blechen mit zunehmender Dicke des Grundwerkstoffes verschlechtern, konnten bisher keine walzplattierten Bleche mit diesen Dicken bei der (vom Standard bzw. Kunden) geforderten Mindestzähigkeit hergestellt werden.

Beispielsweise verwendet das walzplattierte Blech als metallischen Grundwerkstoff einen Kohlenstoffstahl, der der Normen API 5L, insbesondere API 5L grade X65, DNV OS-F101, ISO 3183 oder vergleichbaren Normen entspricht.

Beispielsweise verwendet das walzplattierte Blech eine metallische Grundwerkstoffschicht, die eine Zähigkeit aufweist, die einer Kerbschlagarbeit von mindestens 50J bei -70°C, insbesondere -80°C und/oder einem Mattbruchanteil nach dem Battelle-Drop-Weight-Tear-Test von mindestens 80% bei -20°C, insbesondere -30°C entspricht.

Beispielsweise verwendet das walzplattierte Blech eine metallische Auflagewerkstoffschicht, die eine Dicke von gleich oder größer als 2,0 mm, insbesondere gleich oder größer als 2,5 mm aufweist.

Nachfolgend werden Ausführungsbeispiele und Weiterbildungen der Erfindungen in beispielhafter Weise anhand der schematischen Zeichnungen erläutert, wobei in den Zeichnungen teilweise ein unterschiedlicher Detaillierungsgrad verwendet wird. Die Zeichnungen sind nicht maßstabsgetreu. Gleiche Bezugszeichen bezeichnen dieselben oder ähnliche Teile.

Figur 1 zeigt verschiedene Stadien eines Ausführungsbeispiels eines erfindungsgemäßen Verfahrens zur Herstellung von walzplattierten Blechen.

Figur 2 zeigt ein Temperaturprofil eines Ausführungsbeispiels eines erfindungsgemäßen Verfahrens.

Figur 3 zeigt ein Temperaturprofil eines Beispiels zur Ermittlung der Fließspannung einer Grundwerkstoffschicht und einer Auflagewerkstoffschicht.

Figur 4 veranschaulicht in beispielhafter Weise die Verläufe der Fließspannung einer Grundwerkstoffschicht und zweier Auflagewerkstoffschichten mit unterschiedlichem Nb-Gehalt gegenüber der Temperatur, wobei als Parameter die Nummer des Stiches bei der Umformung angegeben ist.

Figur 5 zeigt in beispielhafter Weise den Verlauf der Fließspannung eines Auflagewerkstoffes mit einem Nb-Gehalt von 3,5% und den Verlauf der Fließspannung eines identisch prozessierten Auflagewerkstoffes mit einem Nb-Gehalt von 2,0%.

Figur 6 zeigt ein Diagramm, in welchem die beim Streichertest ASTM G 28 A ermittelte Abtragsrate in mm/a über dem Nb-Gehalt in Masse-% für verschiedene Auflagewerkstoffe aufgetragen ist.

Figur 7 zeigt ein Diagramm, in welchem die beim Lochfraßtest ASTM G 48 C ermittelte kritische Lochfraßtemperatur CPT in °C über dem Nb-Gehalt in Masse-% für verschiedene Auflagewerkstoffe aufgetragen ist.

Figur 8 zeigt ein Diagramm, in welchem die beim Grünen Tod Test ermittelte kritische Lochfraßtemperatur CPT in °C über dem Nb-Gehalt in Masse-% für verschiedene Auflagewerkstoffe aufgetragen ist.

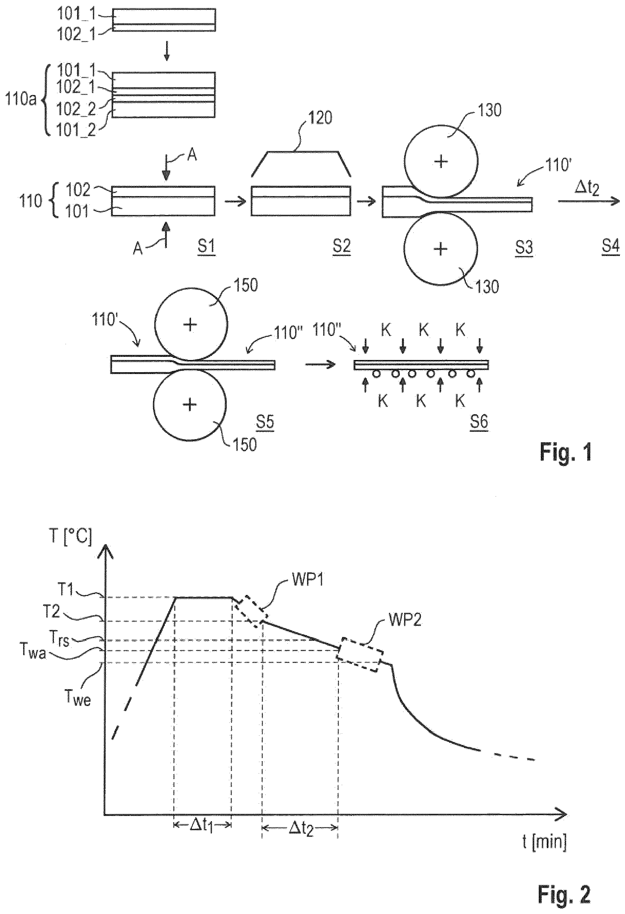

Figur 1 zeigt eine Reihe von Prozessstadien eines Ausführungsbeispiels eines erfindungsgemäßen Verfahrens zur Herstellung von walzplattierten Blechen.

Beim Walzplattieren werden Verbundwerkstoffe mit einer metallurgischen Bindung zwischen zumindest zwei Schichten von wenigstens zwei unterschiedlichen metallischen Werkstoffen hergestellt. Schritt S1 verdeutlicht eine Phase des Herstellungsprozesses, in welcher eine Auflagewerkstoffschicht 102 auf eine Grundwerkstoffschicht 101 aufgelegt wird.

Sowohl bei der Grundwerkstoffschicht 101 als auch bei der Auflagewerkstoffschicht 102 handelt es sich um vorproduzierte metallische Schichten, die zunächst ohne metallische Verbindung zueinander aufeinander aufliegen. Beide Werkstoffschichten 101, 102 können davor gesondert als Bleche oder Bänder in einem Metallprodukte produzierenden Werk hergestellt worden sein.

Die Schichtdicke der Grundwerkstoffschicht 101 ist üblicherweise größer als die Schichtdicke der Auflagewerkstoffschicht 102. Üblicherweise ist es die Aufgabe der Grundwerkstoffschicht 101, die statischen und dynamischen Lasten zu bewältigen, während die Auflagewerkstoffschicht 102 vor allem die Aufgabe hat, die Grundwerkstoffschicht 101 vor korrosivem Angriff durch aggressive Umgebungsmedien zu schützen. Die Auflagewerkstoffschicht 102 kann jedoch auch teilweise oder vollständig in die Berechnung der Wandstärke des fertiggestellten walzplattierten Bleches zur Aufnahme der statischen und dynamischen Lasten einbezogen werden.

Bei dem Grundwerkstoff kann es sich beispielsweise um einen Kohlenstoffstahl handeln. Bei dem Auflagewerkstoff kann es sich beispielsweise um eine Nickelbasislegierung, insbesondere um eine Nickel-Chrom-Molybdän-Niob-Legierung handeln.

Die für die Herstellung von walzplattierten Blechen verwendeten Werkstoffe sowie ihre physikalischen Eigenschaften sind in der Technik bekannt und standardisiert. Ein Kunde, der beispielsweise ein walzplattiertes Blech für Offshore Line Pipes benötigt, kann anhand der standardgemäß vorgegebenen Eigenschaften (chemische Zusammensetzung der Werkstoffe, Schichtdicken, Korrosionsbeständigkeit gegenüber diversen Umgebungsmedien, Zähigkeitseigenschaften, Festigkeits- und Dehnungseigenschaften, Lochfraßbeständigkeit, Schweißeignung, usw.) sicher sein, dass die von ihm gestellten Anforderungen in Bezug auf die genannten Eigenschaften erfüllt sind. Insbesondere bei der Verwendung von walzplattierten Blechen im Erdöl- und Gasbereich werden als Grundwerkstoff üblicherweise Kohlenstoffstähle verwendet, die der jeweils gültigen Norm API 5L, insbesondere API 5L grade X65, DNV OS-F101, ISO 3183 oder vergleichbaren Normen entsprechen. Als Auflagewerkstoff wird beispielsweise eine Nickelbasislegierung eingesetzt, beispielsweise Alloy 625 mit der Werkstoffnummer 2.4856, deren chemische Zusammensetzung oben angegeben ist.

Neben der in Figur 1 beispielhaft dargestellten einseitigen Auflage der Auflagewerkstoffschicht 102 auf die Grundwerkstoffschicht 101 kann auch eine beidseitige Auflage von Auflagewerkstoffschichten 102 auf die dann dazwischen liegende Grundwerkstoffschicht 101 vorgesehen sein. Ebenfalls können mehrere Grundwerkstoffschichten 101 vorgesehen sein, zwischen denen ein oder mehrere Auflagewerkstoffschichten 102 angeordnet sind. Ein praktisches Beispiel einer solchen mehrschichtigen Anordnung ist in Figur 1 gezeigt, wobei zwei Grundwerkstoffschichten 101_1, 101_2 und zwei Auflagewerkstoffschichten 102_1 und 102_2 verwendet werden, die in der Reihenfolge 101_1, 102_1, 102_2, 101_2 übereinander angeordnet sind, wobei gegebenenfalls zwischen den Auflagewerkstoffschichten ein Separationsmedium eingebracht sein kann um eine Bindung zwischen den beiden Auflagewerkstoffen zu vermeiden. Beispielsweise können keramische Werkstoffe als Separationsmedien eingesetzt sein.

Das Aufeinanderlegen der Werkstoffschichten 101, 102 ist in Figur 1 mit den Pfeilen A veranschaulicht. Der durch das Aufeinanderlegen der Werkstoffschichten 101, 102 erzeugte Schichtstapel wird als Schichtpaket 110 bezeichnet. Das Schichtpaket 110a, das beispielsweise durch das Aufeinanderlegen der Schichten 101_1, 102_1 sowie 102_2, 101_2 erzeugt wird, ist eine der möglichen Varianten, gemäß denen das Schichtpaket 110 in der Praxis realisiert sein kann.

Das Schichtpaket 110 wird im Schritt S2 erwärmt. Gemäß Figur 2, die einen beispielhaften Temperaturverlauf eines Ausführungsbeispiels eines erfindungsgemäßen Verfahrens zeigt, erfolgt die Erwärmung des Schichtpakets 110 auf eine Temperatur T1.

Die Erwärmung kann beispielsweise in einem Ofen 120, siehe Schritt S2 in Figur 1, bewirkt werden. Als Ofen 120 kann beispielsweise ein Stoßofen eingesetzt werden, bei dem das Schichtpaket 110 mittels einer Schiebe- und Austrageeinrichtung durch den Ofen 120 hindurchgeschoben und ausgetragen wird.

Das Schichtpaket 110 kann sich über eine erste Zeitdauer $\Delta t_1$ in dem Ofen 120 befinden. Während der Zeitdauer $\Delta t_1$ kann eine über den Querschnitt der Werkstoffschichten 101, 102 gleichmäßige Erwärmung erreicht werden. Die Temperatur T1 kann beispielsweise zwischen 1000°C und 1200°C betragen. Insbesondere kann die Temperatur gleich oder höher oder niedriger als 1050°C, 1100°C oder 1150°C sein.

Beispielsweise unmittelbar nach dem Austrag des Schichtpaketes 110 aus dem Ofen 120 (Schritt S2) wird das Schichtpaket 110 in einer ersten Walzphase WP1 gewalzt (Schritt S3). Das Walzen in der ersten Walzphase WP1 kann aus einem oder mehreren Walzschritten (Stichen) bestehen. Das Walzen in der ersten Walzphase WP1 wird auch als Vorwalzen bezeichnet. Das Vorwalzen wird üblicherweise in einem oder mehreren Walzgerüsten 130 durchgeführt, wobei durch ein reversierendes Walzen die Anzahl der Stiche gegenüber der Anzahl der Walzgerüste (gleich oder größer als eins) erhöht werden kann.

Beim Vorwalzen (WP1) werden die Werkstoffmaterialien homogenisiert und es wird die Dicke des Schichtpakets 110 reduziert. Ferner wird die metallurgische Bindung zwischen der Grundwerkstoffschicht 101 und der Auflagewerkstoffschicht 102 erzeugt. Die mechanischen Eigenschaften des späteren walzplattierten Bleches werden beim Vorwalzen noch nicht eingestellt. Das Schichtpaket 110 mit reduzierter Dicke ist in Figur 1 mit dem Bezugszeichen 110' bezeichnet.

Anschließend wird das Schichtpaket 110' über eine Zeitdauer $\Delta t_2$ abgekühlt, siehe Figur 1, Schritt S4. Bei der Abkühlung wird beispielsweise die Rekristallisationsstopptemperatur Trs unterschritten. Das Abkühlen kann beispielsweise an Luft erfolgen und die Abkühlzeitdauer $\Delta t_2$ kann beispielsweise 1 bis 3 oder auch bis zu 15 Minuten betragen. Die Abkühlzeitdauer $\Delta t_2$ ist üblicherweise abhängig von der Dicke des Schichtpakets 110' und von der gewünschten Temperaturdifferenz zwischen der ersten Walzphase WP1 und der sich an die Abkühlzeitdauer $\Delta t_2$ anschließenden zweiten Walzphase WP2.

Wie bereits erwähnt kann - anders als in Figur 2 lediglich beispielhaft dargestellt - auch ein nicht stetig fallendes Temperaturprofil mit ein oder mehreren zwischenzeitlichen Erwärmungsphasen während der Abkühlzeitdauer $\Delta t_2$ angewandt werden. Auch in diesem Fall ist es vorteilhaft, wenn während der zweiten Walzphase WP2 (oder in manchen Fällen auch schon bei deren Beginn) die Temperatur des Schichtpakets 110' unterhalb der Rekristallisationsstopptemperatur Trs liegt, da andernfalls der Effekt des hier verwendeten thermomechanischen Walzverfahrens bezüglich der gewünschten Verbesserung der Zähigkeitseigenschaften des fertigen Produkts (walzplattiertes Blech) geschmälert wird.

Ein thermomechanisches Walzen unterscheidet sich vom herkömmlichen Warmwalzen dadurch, dass die letzten Stiche der abschließenden Walzphase unterhalb von Trs vorgenommen werden, wobei der gesamte Walzprozess zumeist mindestens zwei Walzphasen WP1 und WP2 mit wenigstens einer dazwischenliegenden, gezielten - d.h. zeitlich und/oder temperaturmäßig gesteuerten - Abkühlungsphase und möglichen dazwischenliegenden Erwärmungsphasen umfasst. Die (mindestens) zweite beziehungsweise abschließende Walzphase WP2 einer thermomechanischen Walzung wird auch als Endwalzen oder Fertigwalzen bezeichnet.

In Figur 1 erfolgt die zweite Walzphase WP2 in einem Walzgerüst 150 (siehe Schritt S5), das mit dem Walzgerüst 130 identisch sein kann oder sich von dem Walzgerüst 130 unterscheiden kann. Wie schon beim Vorwalzen kann auch das Fertigwalzen (WP2) in ein oder mehreren Walzgerüsten reversierend oder nicht-reversierend durchgeführt werden. Auch hier hängt die Anzahl der Stiche von der Ausgangsdicke des Schichtpakets 110', der gewünschten Dickenreduzierung, dem gewünschten Endverformungsgrad, den physikalischen Eigenschaften der Werkstoffe die gewalzt werden, usw. ab.

Die Walzanfangstemperatur Twa bei der Walzphase WP2 wird so gewählt, dass die Walzendtemperatur Twe den gewünschten Zielwert von gleich oder kleiner 880°C, insbesondere 850°C hat.

Die Walzendtemperatur Twe ist definiert als die Temperatur des Schichtpakets 110' beim Fertigwalzen (Walzphase WP2) unmittelbar vor dem letzten Walzstich, d.h. unmittelbar vor dem letztmaligen Eintritt in das Walzgerüst 150. Die Temperaturen werden üblicherweise mittels eines Pyrometers gemessen und repräsentieren in diesem Fall die oberflächlich gemessenen Temperaturen. Es können jedoch auch mittlere Temperaturen rechnerisch gemittelt über die Blechdicke für die Bestimmung der Temperatur Twe (sowie auch der anderen hier genannten Temperaturen) herangezogen werden.

Durch die Einstellung einer Walzendtemperatur Twe von gleich oder weniger als 880°C wird erreicht, dass das fertige Produkt (walzplattierte Blech) verbesserte Zähigkeitseigenschaften aufweist. Je niedriger die Walzendtemperatur Twe, desto bessere Zähigkeitseigenschaften lassen sich mit dem thermomechanischen Walzplattieren erreichen.

Das Schichtpaket nach dem Fertigwalzen (WP2) wird mit dem Bezugszeichen 110" bezeichnet. Das fertiggewalzte Schichtpaket 110" ist gegenüber dem vorgewalzten Schichtpaket 110' nochmals in seiner Dicke reduziert. Ferner werden - wie bereits erwähnt - beim Fertigwalzen (WP2) die mechanischen Eigenschaften des walzplattierten Bleches eingestellt.

In Schritt S6 (Figur 1) kann das fertiggewalzte Schichtpaket 110" einer verglichen mit einer Abkühlung an Luft beschleunigten Abkühlung unterzogen werden, siehe auch Figur 2. Die beschleunigte Abkühlung kann beispielsweise durch ein Kühlmedium, z.B. der Beaufschlagung des fertiggewalzten Schichtpakets 110" mit Wasser, erreicht werden. Das Kühlmedium ist in Figur 1 durch die Pfeile K veranschaulicht.

Die beschleunigte Abkühlung kann beispielsweise bis auf eine Temperatur von 100°C des fertiggewalzten Schichtpaketes 110" durchgeführt werden. Die beschleunigte Abkühlung wirkt sich ebenfalls vorteilhaft auf die erreichbaren Zähigkeitseigenschaften des walzplattierten Bleches aus.

Im Anschluss an die beschleunigte Abkühlung können weitere Verfahrensschritte wie Einebnen, Ultraschalltesten, Abschneiden der Ränder (beispielsweise durch Plasmaschneiden), gegebenenfalls Vereinzelung in Platinen, Schleifen und Endkontrolle stattfinden, die hier nicht im Einzelnen beschrieben werden. Die physikalischen Eigenschaften des fertigen Produkts (walzplattiertes Blech) sind im Wesentlichen mit dem (optionalen) Schritt S6 der beschleunigten Abkühlung eingestellt.

Die Erhöhung der Zähigkeit bzw. die Verbesserung der Zähigkeitseigenschaften der erfindungsgemäß hergestellten walzplattierten Bleche wird maßgeblich durch die niedrige Walzendtemperatur bewirkt. Niedrige Walzendtemperaturen im Bereich der hier angegebenen Werte waren bisher nicht möglich, da diese niedrigen Temperaturen es nicht ermöglichten, dass die bei der Vorverformung (d.h. dem Vorwalzen in der ersten Walzphase WP1) bereits erzeugte metallurgische Bindung beim Fertigwalzen (d.h. in der zweiten Walzphase WP2) standhielt. Bei konventionellen Prozessen war ein Fertigwalzen bei Walzendtemperaturen Twe um 900°C gerade noch möglich, jedoch wurde bei tieferen Walzendtemperaturen die bereits erzeugte metallurgische Bindung zwischen der Grundwerkstoffschicht 101 und der Auflagewerkstoffschicht 102 bei den benötigten Verformungsgraden wieder aufgerissen.

Die Reduzierung des Nb-Gehaltes des Auflagewerkstoffes ermöglicht es nun, die Walzendtemperatur Twe zu reduzieren, ohne dass die metallurgische Bindung zwischen den Werkstoffschichten 101, 102 beim Fertigwalzen (WP2) geschädigt wird. Das schädigungsfreie Fertigwalzen (WP2) wird erfindungsgemäß dadurch ermöglicht, dass aufgrund der Reduzierung des Nb-Gehaltes der relativ große Unterschied zwischen der Fließspannung des Auflagewerkstoffes und der Fließspannung des Grundwerkstoffes bei den Walztemperaturen der zweiten Walzphase (WP2) verkleinert wird.

Je höher die Fließspannung, desto höher ist der Verformungswiderstand des Werkstoffs. Wenn die Fließspannung hoch ist, dann leistet der Werkstoff einen hohen Widerstand gegen Verformung und es werden hohe Walzkräfte benötigt, um das Material geeignet verformen zu können. Wenn die Fließspannung klein ist, genügen vergleichsweise geringe Walzkräfte, um die Verformung durchführen zu können.

Durch die Verkleinerung des Unterschieds zwischen den Fließspannungen (d.h. Verformbarkeiten) des Auflagewerkstoffes und des Grundwerkstoffes kommt es in der Bindeebene zwischen dem Auflagewerkstoff und dem Grundwerkstoff zu einer Verringerung der mechanischen Spannungen. Dadurch wird das Aufreißen der metallurgischen Bindung, welches durch zu hohe mechanische Spannungen hervorgerufen wird, vermieden.

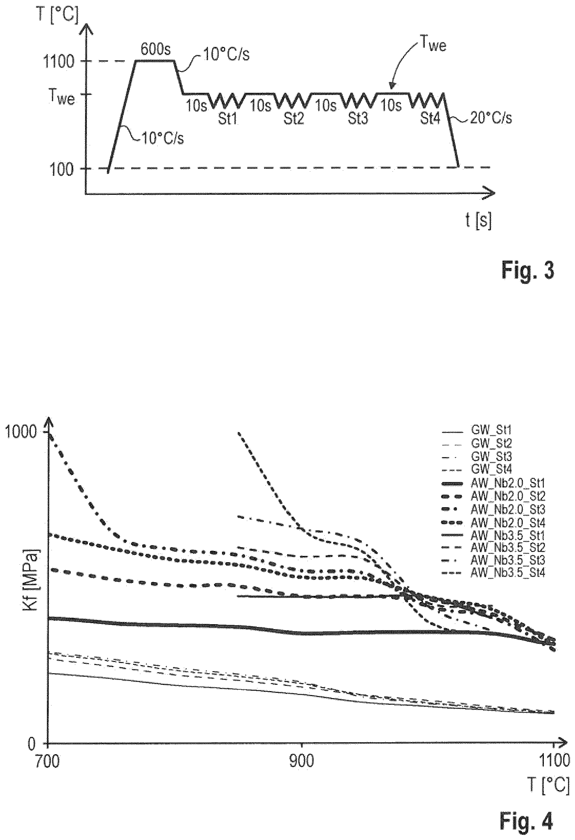

Die Figuren 3 und 4 dienen der beispielhaften Erläuterung des Fließspannungsverhaltens von Grundwerkstoff und Auflagewerkstoff in Abhängigkeit von der Temperatur bei unterschiedlichen chemischen Zusammensetzungen des Auflagewerkstoffes. Die Fließspannungen des Auflagewerkstoffes und des Grundwerkstoffes wurden mittels eines Dilatometers gemessen. Hierfür wurden Proben der verwendeten Werkstoffe einer Erwärmung und einer den Walzprozess simulierenden Umformung unterworfen, wie dies in Figur 3 veranschaulicht ist.

Zunächst wurden die Proben auf eine Temperatur von 1100°C erwärmt und über eine Zeitdauer von 600 Sekunden auf dieser Temperatur gehalten. Die Aufheizgeschwindigkeit betrug 10°C/Sekunde. Anschließend wurden die Proben mit einer Geschwindigkeit von 10°C/Sekunde auf eine Verformungstemperatur abgesenkt, welche die Walzendtemperatur Twe im tatsächlichen Herstellungsablauf der walzplattierten Bleche nachbildet. Bei dieser Verformungstemperatur Twe wurden mit jeweils zwischenliegenden Wartezeiten von 10 Sekunden vier Walzstiche St1, St2, St3 und St4 gefahren. Die Umformgeschwindigkeit betrug jeweils dPhi/dt = 2,0. Anschließend erfolgte eine beschleunigte Abkühlung bis auf 100°C mit einer Kühlrate von 20°C/Sekunde.

Die Fließspannungen der Proben wurden mittels eines Dilatometer im ersten Stich (St1), zweiten Stich (St2), dritten Stich (St3) und vierten Stich (St4) ermittelt. Die Versuche wurden bei unterschiedlichen Verformungstemperaturen Twe durchgeführt. Die Ergebnisse der Versuche sind in Figur 4 für einen Grundwerkstoff (GW) der Bezeichnung GW8932 entsprechend der API 5L grade X65, einem Auflagewerkstoff Alloy 625 mit Nb = 3,5% (AW_Nb3.5) sowie einem modifizierten Auflagewerkstoff Alloy 625mod, identisch mit Alloy 625 jedoch mit Nb = 2,0% und entsprechender Substitution des verringerten Nb-Gehaltes durch Ni oder Cr (AW_Nb2.0), dargestellt.

Aus Figur 4 ist ersichtlich, dass die Fließspannung Kf in Einheiten von MPa des Grundwerkstoffes (Kohlenstoffstahl) zu geringeren Verformungstemperaturen T (entspricht Twe) hin nur langsam ansteigt und sich für die Stiche St1, St2, St3 und St4 nur geringfügig unterscheidet. Der Verformungswiderstand des Grundwerkstoffes GW ist also vergleichsweise wenig temperaturabhängig und vergrößert sich zwischen den Stichen nur relativ geringfügig. Die Temperaturverläufe der Fließspannung Kf des Grundwerkstoffes bei den Stichen St1, St2, St3, St4 werden mit GW_St1, GW_St2, GW_St3 bzw. GW_St4 bezeichnet.

Die Temperaturverläufe der Fließspannung Kf des herkömmlichen Auflagewerkstoffes Alloy 625 mit Nb = 3,5% bei den Stichen St1, St2, St3, St4 werden mit AW_Nb3.5_St1, AW_Nb3.5_St2, AW_Nb3.5_St3 bzw. AW_Nb3.5_St4 bezeichnet. Der Auflagewerkstoff Alloy 625 mit Nb = 3,5% zeigt insbesondere bei höheren Verformungsgraden (vierter Stich St4) eine deutlich stärkere Temperaturabhängigkeit als der Grundwerkstoff. Wie aus Figur 4 ersichtlich ist, steigt die Fließspannung Kf des Auflagewerkstoffes Alloy 625 mit Nb = 3,5% beim Unterschreiten von etwa 900°C im vierten Stich St4 stark an. Dieser starke Anstieg führt zu einer sich rasch vergrößernden Differenz zwischen den Fließspannungen des Grundwerkstoffes und des Auflagewerkstoffes bei höheren Verformungsgraden und tieferen Temperaturen, wodurch die bereits erwähnte Zerstörung der metallurgischen Bindung zwischen den Werkstoffen bei diesen Bedingungen hervorgerufen wird.

Die Temperaturverläufe der Fließspannung Kf des modifizierten Auflagewerkstoffes Alloy 625mod mit Nb = 2,0% bei den Stichen St1, St2, St3, St4 werden mit AW_Nb2.0_ St1, AW_Nb2.0_St2, AW_Nb2.0_St3 bzw. AW_Nb2.0_St4 bezeichnet. Die Temperaturverläufe der Fließspannung des modifizierten Auflagewerkstoffes Alloy 625mod mit Nb = 2,0% verlaufen jeweils unterhalb der Temperaturverläufe des Auflagewerkstoffes Alloy 625 mit Nb = 3,5%. Auch hier ist ein Anstieg der Fließspannung Kf zu geringeren Verformungstemperaturen Twe und höheren Verformungsgraden (höhere Anzahl von Stichen) hin zu erkennen. Jedoch ist die Differenz zwischen den Fließspannungen des Grundwerkstoffes und des modifizierten Auflagewerkstoffes Alloy 625mod geringer und vor allem tritt der signifikante Anstieg im Fließspannungsverlauf zu geringeren Temperaturen hin erst bei einem Wert von deutlich unter 800°C bei maximalem Verformungsgrad (St4) auf. Dies ist ursächlich dafür, dass bei dem erfindungsgemäßen Verfahren bei Verwendung eines Auflagewerkstoffes mit reduziertem Nb-Gehalt die metallurgische Bindung zwischen dem Auflagewerkstoff und dem Grundwerkstoff bei niedrigen Walzendtemperaturen Twe und den benötigten Umformungsgraden intakt bleibt.

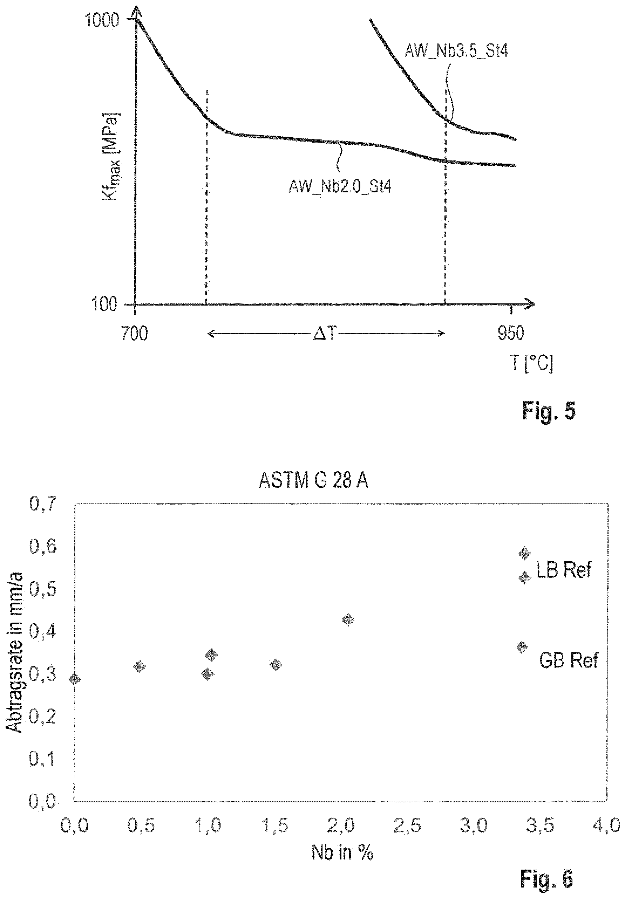

Dieser Unterschied im Fließspannungsverhalten ist nochmals in Figur 5 wiedergegeben, in welcher die maximalen Fließspannungen Kfmax (d.h. Kf im vierten Stich St4) in Einheiten von MPa des herkömmlichen Auflagewerkstoffes (Alloy 625) und des modifizierten Auflagewerkstoffes (Alloy 625mod) einander gegenübergestellt sind. Das Temperaturfenster $\Delta T$ ermöglicht tiefere Walzendtemperaturen Twe und damit das Einstellen der besseren Zähigkeitseigenschaften des Grundwerkstoffes bzw. des walzplattierten Bleches.

Bei der tatsächlichen Herstellung von walzplattierten Blechen kann die Erwärmung des Schichtstapels auf die hier angegebene Temperatur (etwa 1100°C $\pm$ 50°C oder $\pm$ 100°C) erfolgen. Da die erste Walzphase (WP1) keinen Einfluss auf die Fließspannung bei den letzten Stichen in der zweiten Walzphase (WP2) aufweist, brauchte die erste Walzphase (WP1) bei den in den Figuren 3 und 4 dargestellten Versuchen nicht nachgebildet zu werden. D.h., die Stiche St1, St2, St3 und St4 entsprechen Stichen in der zweiten Walzphase (WP2) bei der tatsächlichen Herstellung der walzplattierten Bleche. Allerdings werden bei der tatsächlichen Herstellung walzplattierter Bleche in der zweiten Walzphase (WP2) meistens mehr Stiche (z.B. 10 bis 20 Stiche) verwendet und die zwischen den Stichen liegenden Zeiträume können anders als bei dem hier gezeigten Versuch gewählt werden.

Die Zähigkeit des walzplattierten Bleches ist sowohl von der Blechdicke als auch von der Temperatur im praktischen Einsatz abhängig. Je tiefer die Einsatztemperatur und je dicker das Blech, desto geringer ist die Zähigkeit (und entsprechend höher ist die Sprödigkeit) des Bleches. Die hier angesprochenen verbesserten Zähigkeitseigenschaften können also eine erhöhte Zähigkeit bei gleicher Einsatztemperatur und/oder Blechdicke oder eine gleiche Zähigkeit bei tieferen Einsatztemperaturen und/oder größeren Blechdicken bedeuten.

Maße für die Zähigkeit werden durch standardisierte Messverfahren ermittelt, beispielsweise durch die Ermittlung der Kerbschlagarbeit und/oder durch die Ermittlung des Mattbruchanteils im Battelle-Drop-Weight-Tear-Test (BDWTT). Durch die Reduzierung des Nb-Gehaltes des Auflagewerkstoffes von 3,5% auf beispielsweise 2,0% (d.h. Verwendung von Alloy 625mod anstelle von Alloy 625) konnte die Kerbschlagarbeit von > 50J bei einer Prüftemperatur von -60°C und einer Dicke des Grundwerkstoffes von 25 mm auf einen Wert von > 50J bei einer Prüftemperatur von -80°C und einer Dicke des Grundwerkstoffes von 40 mm verbessert werden. Der Mattbruchanteil im BDWTT konnte von mindesten 80% bei einer Prüftemperatur von -10°C und einer Dicke des Grundwerkstoffes von 25 mm auf mindestens 80% bei einer Prüftemperatur von -30°C und einer Dicke des Grundwerkstoffes von 40 mm verbessert werden. D.h. die vom Kunden geforderten Zähigkeitswerte können für dickere Bleche und/oder bei tieferen Einsatztemperaturen garantiert werden.

Der Grundwerkstoff entsprach dabei der zuvor angeführten Norm API 5L X65 oder vergleichbaren Normen.

Die Modifizierung des Auflagewerkstoffes hatte keine nachteiligen Auswirkungen auf dessen gute Korrosionsschutzeigenschaften. Korrosionsschutzeigenschaften werden in der Technik ebenfalls durch bekannte, standardisierte Messverfahren beurteilt. Bei einer Dicke sowohl des herkömmlichen Auflagewerkstoffes (Alloy 625 mit Werkstoffnummer 2.4856) als auch des modifizierten Auflagewerkstoffes (entsprechend Alloy 625mod) von 3 mm wurde im Streichertest ASTM G 28 A jeweils ein maximaler jährlicher Abtrag von 1,2mm/a ermittelt und es wurde im Lochfraßtest ASTM G 48 A jeweils kein Lochfraß bei 50°C festgestellt. Gleiche Resultate zeigten sich auch für andere Werkstoffe der Norm Alloy 625 mit Werkstoffbezeichnungen UNS N06625, LC2262, etc.

Um die Auswirkung der Reduzierung des Nb-Gehaltes auf die Korrosion zu untersuchen, wurde 10 kg Laborchargen erschmolzen.

Die Tabellen 1A und 1B zeigen die Analysen der im Labormaßstab erschmolzenen Chargen zusammen mit einigen zum Vergleich herangezogenen großtechnischen erschmolzenen Chargen Alloy 625 nach dem Stand der Technik. Die Chargen nach dem Stand der Technik sind mit einem T gekennzeichnet, die erfindungsgemäßen mit einem E. Die im Labormaßstab erschmolzenen Chargen sind mit einem L gekennzeichnet, die großtechnisch erschmolzenen Chargen mit einem G. Die großtechnisch erschmolzene Charge 135896 ist eine Charge Alloy 625 nach dem Stand der Technik. Die Charge 250537 ist Alloy 625, aber als Laborcharge erschmolzen und dient als Referenz und zur Absicherung der Vergleichbarkeit von Ergebnissen an Laborchargen und großtechnischen Chargen. Alle Chargen haben eine ähnliche die Lochfraßkorrosionsbeständigkeit bestimmende PREN von 50,07 bis 51,28.

Die Beständigkeit gegen Lochfraßkorrosion wird durch folgende empirische Formel angegeben:

$$PREN = Cr + 3,3 * (Mo + W) + 16 * N.$$

Cr, Mo, W, N sind dabei die Gehalte der Elemente in Masse-%. Hohe Gehalte an Cr, Mo, W und N bewirken eine hohe Beständigkeit gegen Lochfraßkorrosion. Die PREN ist eine empirische Formel, neben der es weitere Einflussgrößen geben kann.

Die Blöcke der im Labormaßstab im Vakuum erschmolzenen Legierungen in Tabelle 1A und 1B wurden zwischen 1100°C und 1250°C für 0,1 bis 70 Stunden geglüht und mittels Warmwalzen und weiteren Zwischenglühungen zwischen 1100°C und 1250°C für 0,1 bis 10 Stunden auf eine Enddicke von 12 mm warmgewalzt. Die Bleche wurden danach zwischen 950°C und 1050°C rekristallisiert. Aus diesen Blechen wurden die für die Messungen benötigten Proben hergestellt.

Die großtechnisch erschmolzene Vergleichscharge wurde offen erschmolzen, gefolgt von einer Behandlung in einer VOD Anlage und als Strangguss abgegossen. Die Stranggussblöcke wurden zwischen 1100°C und 1250°C für 0,1 min bis 70 h, gegebenenfalls unter Schutzgas, wie z.B. Argon oder Wasserstoff geglüht, gefolgt von einer Abkühlung an Luft, in der bewegten Glühatmosphäre oder im Wasserbad und mittels Warmwalzen und weiteren Zwischenglühungen zwischen 1100°C und 1250°C für 0,1 bis 20 Stunden an eine Enddicke von 5 bzw. 16 mm warmgewalzt.

Die Bleche wurden danach zwischen 950°C und 1050°C rekristallisiert. Aus diesen Blechen wurden die für die Messungen benötigten Proben gefertigt.

Die für die Korrosionsversuche benötigen Proben wurden abschließend rundherum geschliffen und danach gereinigt.

Es wurde ein Korrosionsversuch nach ASTM G 28 A, durchgeführt. Dieser Test misst die Empfindlichkeit eines Werkstoffes für interkristalline Korrosion. Das Ergebnis zeigt Figur 6 als Auftragung der Abtragrate über dem Nb-Gehalt bzw. Tabelle 2 mit Zahlenwerten. Zuerst einmal ist zu bemerken, dass die Referenzlaborcharge 250537 (LB Ref in Figur 6) eine höhere Abtragsrate als die großtechnische Vergleichscharge 135896 (GT Ref in Figur 6) hat. Das kann bei Laborchargen auf Grund des ungünstigen Oberflächen-zu-Volumenverhältnis im Vergleich zu großtechnischen Chargen bei manchen Tests beobachtet werden. Alle Laborchargen mit kleinerem Nb-Gehalt haben eine niedriger Abtragsrate, so dass davon auszugehen ist, dass die interkristalline Korrosion gemäß ASTM G 28 A sich mit Verringerung des Nb-Gehaltes auf ≤ 2,8% Nb nicht verschlechtert.

Es wurde außerdem ein Korrosionsversuch nach ASTM G 48 C, durchgeführt. Dieser Test misst die Empfindlichkeit eines Werkstoffes für die Lochfraßkorrosion. Der Test wurde hier leicht modifiziert, da bei den Laborchargen nur beschränkte Mengen an Probenmaterial zur Verfügung stehen, so dass nicht für jede Temperatur eine neue Probe genommen werden kann. Der erste Test wurde bei 50°C, bzw. für die niedrigen Nb-Gehalte auch bei 40°C durchgeführt. Die Probe wurde dann gewogen und erneut in frischer Lösung aber 5°C höher eingesetzt. Dies wurde wiederholt, bis deutlicher Lochfraß auftrat, zu erkennen am sprunghaft erhöhtem Massenverlust und deutlicher Lochbildung. Die erste Temperatur bei der dies auftrat ist die kritische Lochfraßtemperatur (CPT). Ein Werkstoff ist umso unempfindlicher gegenüber Lochfraßkorrosion, je höher diese Temperatur liegt (der so modifizierte Test hat tendenziell höhere CPT als ein Test bei dem bei jeder Temperatur neue Proben genommen werden).

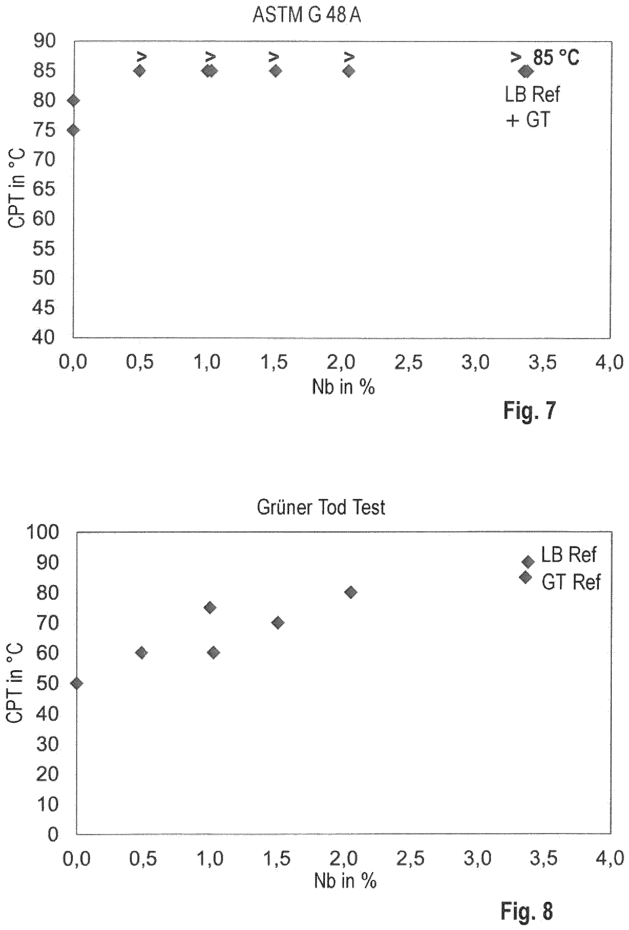

Das Ergebnis zeigt Figur 7, als Auftragung der kritischen Lochfraßtemperatur CPT in °C über dem Nb-Gehalt bzw. die Tabelle 2 mit Zahlenwerten. Zuerst einmal ist zu bemerken, dass hier die Referenzlaborcharge 250537 (LB Ref in Figur 7) und die großtechnische Charge 135896 (GT in Figur 7) die Maximaltemperatur des Testes erreichen ohne Lochfraß zu zeigen. Ebenso erreichen auch alle Laborchargen mit einem Nb-Gehalt von Nb ≥ 0,5% die Maximaltemperatur. Nur die Charge ohne Nb zeigt eine geringere Lochfraßtemperatur, was durch einen Wiederholung des Tests bestätigt wurde. Deshalb sollte der Nb-Gehalt nicht auf 0 verringert werten, sondern vorzugweise Nb ≥ 0,5% sein, damit sich die Empfindlichkeit für Lochfraßkorrosion gemäß ASTM G 48 C mit Verringerung des Nb-Gehaltes nicht verschlechtert. Wie oben schon erwähnt, ist die PREN eine empirische Formel, neben der es weitere Einflussgrößen geben kann.

Werkstoffe wie der Alloy 625 sind so korrosionsbeständig, dass sie die Grenzen des modifizierten Tests nach ASTM G 48 C erreichen. Deshalb ist noch eine verschärfte Variante dieses Testes, der sogenannte Grüne Tod Test ("Green Death Test"), angewandt worden.

Dieser Test wird genauso durchgeführt wie der modifizierte Test nach ASTM G 48 C, nur dass statt einer Prüflösung mit 6% $FeCl_3$ und 1% HCL eine Prüflösung mit 11,5% $H_2SO_4$ + 1,2% HCl + 1% $FeCl_3$ + 1% $CuCl_2$ verwendet wird. Das Ergebnis zeigt Figur 8 als Auftragung der kritischen Lochfraßtemperatur CPT über dem Nb-Gehalt bzw. die Tabelle 2 mit Zahlenwerten. Auch hier ist zu bemerken, dass sich die Referenzlaborcharge 250537 (LB Ref in Figur 8) und die großtechnische Charge 135896 (GT Ref in Figur 8) kaum in ihrer kritischen Lochfraßtemperatur unterscheiden. Oberhalb von ca. 2% Nb liegen die gemessenen kritischen Lochfraßtemperaturen im Bereich der statistischen Streuungen, unterhalb ca. 1,5% Nb ist eine merkliche Verringerung zu erkennen. Deshalb sollte der Nb-Gehalt vorzugweise Nb ≥ 1,5% sein, damit sich die Empfindlichkeit für Lochfraßkorrosion im Grünen Tod Test nicht merklich verschlechtert.

Es ist davon auszugehen, dass die hier anhand von Beispielen erläuterten Ergebnisse allgemeingültige Aussagen darstellen, die auf sämtliche in dieser Offenbarung beschriebenen Werkstoffe übertragbar sind.

Tabelle 1A: Zusammensetzung der großtechnisch erschmolzenen Chargen und der Laborchargen, Teil 1. Alle Konzentrationsangaben in Masse-% (Spalte S1 - T: Legierung nach dem Stand der Technik, E: erfindungsgemäße Legierung Spalte S2 - L: im Labormaßstab erschmolzen, G: großtechnisch erschmolzen).

| LB | S1 | S2 | Ni | Cr | Fe | C | Mn | Si | Co | Al | Ti | P | Mo | Nb+Ta |
|---|---|---|---|---|---|---|---|---|---|---|---|---|---|---|
| 250537 | T | L | 61,1 | 21, 6 | 4,54 | 0,014 | <0,01 | 0,15 | <0,01 | 0,14 | 0,2 | 0,003 | 8,74 | 3,38 |
| 250530 | E | L | 64,4 | 21,9 | 4,7 | 0,014 | <0,01 | 0,11 | 0,01 | 0,05 | 0,17 | 0,007 | 8,61 | <0,01 |
| 250532 | E | L | 64,4 | 21,2 | 4,59 | 0,013 | <0,01 | 0,15 | 0,01 | 0,1 | 0,18 | 0,007 | 8,86 | 0,49 |
| 250533 | E | L | 63,1 | 21,9 | 4,54 | 0,013 | <0,01 | 0,15 | 0,01 | 0,11 | 0,2 | 0,006 | 8,88 | 1,00 |
| 250534 | E | L | 63,2 | 21,9 | 4,56 | 0,021 | <0,01 | 0,16 | 0,01 | 0,16 | 0,21 | 0,006 | 8,68 | 1,03 |
| 250535 | E | L | 62,7 | 22,0 | 4,54 | 0,012 | <0,01 | 0,14 | 0,01 | 0,14 | 0,22 | 0,005 | 8,63 | 1,51 |
| 250536 | E | L | 62,2 | 22,0 | 4,56 | 0,011 | <0,01 | 0,15 | 0,01 | 0,13 | 0,22 | 0,005 | 8,64 | 2,05 |
| 135896 | T | G | 61,3 | 21,2 | 4,64 | 0,021 | 0,07 | 0,18 | 0,04 | 0,17 | 0,19 | 0,004 | 8,67 | 3,36 |

Tabelle 1B: Zusammensetzung der großtechnisch erschmolzenen Chargen und der Laborchargen, Teil 2. Alle Konzentrationsangaben in Masse-%.

| LB | S | Ta | B | Cu | W | V | N | Mg | Ca | Pb | PREN |
|---|---|---|---|---|---|---|---|---|---|---|---|
| 250537 | 0,002 | <0,01 | | <0,01 | | <0,01 | 0,006 | 0,012 | <0,001 | | 50,56 |
| 250530 | 0,002 | <0,01 | | <0,01 | | <0,01 | 0,006 | 0,005 | <0,001 | | 50,38 |
| 250532 | 0,002 | <0,01 | | <0,01 | | <0,01 | 0,002 | 0,007 | <0,001 | | 50,44 |
| 250533 | 0,002 | <0,01 | | <0,01 | | 0,01 | 0,004 | 0,007 | <0,001 | | 51,28 |
| 250534 | 0,002 | <0,01 | | <0,01 | | <0,01 | 0,006 | 0,009 | <0,001 | | 50,63 |
| 250535 | 0,002 | <0,01 | | <0,01 | | 0,01 | 0,006 | 0,011 | <0,001 | | 50,58 |
| 250536 | 0,002 | <0,01 | | <0,01 | | <0,01 | 0,006 | 0,008 | <0,001 | | 50,56 |
| 135896 | 0,002 | 0,01 | 0,001 | 0,01 | 0,01 | 0,04 | 0,016 | 0,016 | 0,001 | <0,001 | 50,07 |

Tabelle 2: Ergebnisse der Korrosionstests nach ASTM G 28 A, dem modifiziertem Test nach ASTM G 48 C und dem Grünen Tod Test.

| LB | | | Abtragsrate 'in mm/a G 28 A | CPT in °C Modifizierter ASTM G 48 C | CPT in °C Grüner Tod (Test wie modifizierter ASTM G 48 C) |
|---|---|---|---|---|---|
| 250537 | T | L | 0,526 | 75 80 | 90 |
| 250530 | | L | 0,288 | >85 | 50 |
| 250532 | | L | 0,317 | >85 | 60 |
| 250533 | | L | 0,299 | >85 | 75 |
| 250534 | | L | 0,344 | >85 | 60 |
| 250535 | E | L | 0,321 | >85 | 70 |
| 250536 | E | L | 0,427 | >85 | 80 |
| 135896 | T | T | 0,362 | >85 | 85 |

**Patentansprüche**

1. Verfahren zur Herstellung eines walzplattierten Bleches, wobei das Verfahren umfasst:

Zusammenbringen einer metallischen Grundwerkstoffschicht und einer metallischen Auflagewerkstoffschicht zur Erzeugung eines Schichtpaketes;
Erwärmen des Schichtpaketes;
thermomechanisches Walzen des erwärmten Schichtpaketes, welches eine erste Walzphase zum Vorwalzen des erwärmten Schichtpaketes unter Ausbildung einer metallurgischen Bindung zwischen der metallischen Grundwerkstoffschicht und der metallischen Auflagewerkstoffschicht, eine zweite Walzphase zum Endumformen des Schichtpaketes sowie eine zwischen der ersten Walzphase und der zweiten Walzphase liegende Abkühlzeitdauer umfasst; wobei der Grundwerkstoff ein Kohlenstoffstahl ist und
der Auflagewerkstoff ein Nickelbasiswerkstoff ist, dessen chemische Zusammensetzung in Masse-%

$58\% \le Ni \le 73\%$,
$20\% \le Cr \le 25\%$,
$0\% \le Fe \le 5\%$,
$0\% \le C \le 0,1\%$,
$0\% \le Mn \le 0,5\%$,
$0\% \le Si \le 0,5\%$,
$0\% \le Co \le 1\%$,

0% ≤ Al ≤ 0,4%,
0% ≤ Ti ≤ 0,4%,
0% ≤ P ≤ 0,015%,
0% ≤ S ≤ 0,015%,
8% ≤ Mo ≤ 10%,
1,5% ≤ Nb + Ta ≤ 2,8%,

der Rest Verunreinigungen, aufweist, und wahlweise zusätzlich eines oder mehrerer der folgenden Elemente enthalten kann

0% ≤ Ta ≤ 1%,
0% ≤ B ≤ 0,008%,
Cu ≤ 0,5%,
W ≤ 1%,
V ≤ 0,5%,
N ≤ 0,05%,
Mg ≤ 0,05%,
Ca ≤ 0,05%,
Pb ≤ 0,002%,
Zn ≤ 0,002%,
Sn ≤ 0,002%, und

die Walzendtemperatur der zweiten Walzphase auf einen Wert gleich oder kleiner als 880°C, insbesondere 850°C eingestellt ist.

2.  Verfahren nach Anspruch 1, wobei die chemische Zusammensetzung des Auflagewerkstoffes in Masse-% einen Anteil Nb ≤ 2,5% oder Nb + Ta ≤ 2,5% aufweist.

3.  Verfahren nach Anspruch 1 oder 2, wobei der Auflagewerkstoff eine Nickel-Chrom-Molybdän-Niob-Legierung ist.

4.  Verfahren nach einem der vorhergehenden Ansprüche, wobei der Kohlenstoffstahl in Masse-% eine chemische Zusammensetzung mit ein oder mehreren der Bereiche 0% ≤ C ≤ 0,30% oder 0,16%, 0% ≤ Si ≤ 0,50%, 1,10% ≤ Mn ≤ 1,65% oder 1,40%, 0% ≤ P ≤ 0,022%, 0% ≤ S ≤ 0,010%, 0% ≤ Nb ≤ 0,05%, 0% ≤ Ti ≤ 0,06%, 0% ≤ V ≤ 0,10%, der Rest Eisen und Verunreinigungen, aufweist.

5.  Verfahren nach einem der vorhergehenden Ansprüche, wobei die erste Walzphase bei einer Anfangswalztemperatur von 1000°C bis 1200°C durchgeführt wird.

6.  Verfahren nach einem der vorhergehenden Ansprüche, wobei die Walzendtemperatur geringer, insbesondere mindestens 10°C geringer ist als die Rekristallisationsstopptemperatur der metallischen Grundwerkstoffschicht.

7.  Verfahren nach einem der vorhergehenden Ansprüche, wobei die Abkühlzeitdauer an Luft während des Walzprozesses 3 bis 15 Minuten umfasst.

8.  Walzplattiertes Blech, aufweisend:

ein Kohlenstoffstahl als metallische Grundwerkstoffschicht und eine metallische Auflagewerkstoffschicht, welche über eine metallurgische Bindung miteinander verbunden sind, wobei
der Auflagewerkstoff ein Nickelbasiswerkstoff ist, dessen chemische Zusammensetzung in Masse-%

58% ≤ Ni ≤ 73%,
20% ≤ Cr ≤ 25%,
0% ≤ Fe ≤ 5%,
0% ≤ C ≤ 0,1%,
0% ≤ Mn ≤ 0,5%,
0% ≤ Si ≤ 0,5%,
0% ≤ Co ≤ 1%,
0% ≤ Al ≤ 0,4%,

$0\% \leq Ti \leq 0,4\%$,
$0\% \leq P \leq 0,015\%$,
$0\% \leq S \leq 0,015\%$,
$8\% \leq Mo \leq 10\%$,
$1,5\% \leq Nb + Ta \leq 2,8\%$,

der Rest Verunreinigungen, aufweist, und wahlweise zusätzlich eines oder mehrerer der folgenden Elemente enthalten kann $0\% \leq Ta \leq 1\%$,

$0\% \leq B \leq 0,008\%$,
$Cu \leq 0,5\%$,
$W \leq 1\%$,
$V \leq 0,5\%$,
$N \leq 0,05\%$,
$Mg \leq 0,05\%$,
$Ca \leq 0,05\%$,
$Pb \leq 0,002\%$,
$Zn \leq 0,002\%$,
$Sn \leq 0,002\%$, und

erhältlich durch ein thermomechanisches Walzverfahren mit einer ersten Walzphase zum Vorwalzen, einer zweiten Walzphase zum Endumformen sowie einer zwischen der ersten Walzphase und der zweiten Walzphase liegenden Abkühlzeitdauer, wobei die Walzendtemperatur der zweiten Walzphase auf einen Wert gleich oder kleiner als 880°C, insbesondere 850°C eingestellt ist.

9. Walzplattiertes Blech nach Anspruch 8, wobei die zwischen der ersten Walzphase und der zweiten Walzphase liegende Abkühlzeitdauer eine beschleunigte Abkühlung und/oder eine Erwärmung des Bleches umfasst.

10. Walzplattiertes Blech nach Anspruch 8 oder 9, wobei die metallische Grundwerkstoffschicht eine Dicke von gleich oder größer als 25 mm, insbesondere gleich oder größer als 30 mm oder 35 mm aufweist.

11. Walzplattiertes Blech nach einem der Ansprüche 8 bis 10, wobei der metallische Grundwerkstoff eine chemische Zusammensetzung gemäß einer oder mehrerer der Normen API 5L, insbesondere API 5L grade X65, DNV OS-F101, ISO 3183 oder vergleichbaren Normen aufweist.

12. Walzplattiertes Blech nach einem der Ansprüche 8 bis 11, wobei die metallische Grundwerkstoffschicht eine Zähigkeit aufweist, die einer Kerbschlagarbeit von mindestens 50J bei - 70°C, insbesondere -80°C, und/oder einem Mattbruchanteil nach dem Battelle-Drop-Weight-Tear-Test von mindestens 80% bei - 20°C, insbesondere -30°C, entspricht.

13. Walzplattiertes Blech nach einem der Ansprüche 8 bis 12, wobei die metallische Auflagewerkstoffschicht eine Dicke von gleich oder größer als 2 mm, insbesondere gleich oder größer als 2,5 mm aufweist.

**Claims**

1. Method of producing a roll-bonded metal sheet, the method comprising:

bringing together a metallic base material layer and a metallic overlay material layer to produce a layer package;
heating of the layer package;
thermomechanical rolling of the heated layer package, which comprises a first rolling phase for pre-rolling the heated layer package with formation of a metallurgical bond between the metallic base material layer and the metallic overlay material layer, a second rolling phase for final forming of the layer package, and a cooling time period lying between the first rolling phase and the second rolling phase; wherein the base material is a carbon steel, and
the overlay material is a nickel-based material, the chemical composition of which, in %-by-weight, comprises

$58\% \leq Ni \leq 73\%$,

$20\% \le Cr \le 25\%$,
$0\% \le Fe \le 5\%$,
$0\% \le C \le 0.1\%$,
$0\% \le Mn \le 0.5\%$,
$0\% \le Si \le 0.5\%$,
$0\% \le Co \le 1\%$,
$0\% \le Al \le 0.4\%$,
$0\% \le Ti \le 0.4\%$,
$0\% \le P \le 0.015\%$,
$0\% \le S \le 0.015\%$,
$8\% \le Mo \le 10\%$,
$1.5\% \le Nb + Ta \le 2.8\%$,

the balance impurities, and selectively may additionally contain one or more of the following elements

$0\% \le Ta \le 1\%$,
$0\% \le B \le 0.008\%$,
$Cu \le 0.5\%$,
$W \le 1\%$,
$V \le 0.5\%$,
$N \le 0.05\%$,
$Mg \le 0.05\%$,
$Ca \le 0.05\%$,
$Pb \le 0.002\%$,
$Zn \le 0.002\%$,
$Sn \le 0.002\%$,

and
the final rolling temperature of the second rolling phase is set to a value equal to or less than 880°C, in particular 850°C.

2. Method according to claim 1, wherein the chemical composition of the overlay material, in %-by-weight, comprises $Nb \le 2.5\%$ or $Nb + Ta \le 2.5\%$.

3. Method of claim 1 or 2, wherein the overlay material is a nickel-chromium-molybdenum-niobium alloy.

4. Method of any one of the preceding claims, wherein the carbon steel comprises, in %-by-weight, a chemical composition having one or more of the ranges $0\% \le C \le 0.30\%$ or $0.16\%$, $0\% \le Si \le 0.50\%$, $1.10\% \le Mn \le 1.65\%$ or $1.40\%$, $0\% \le P \le 0.022\%$, $0\% \le S \le 0.010\%$, $0\% \le Nb \le 0.05\%$, $0\% \le Ti \le 0.06\%$, $0\% \le V \le 0.10\%$, the balance iron and impurities.

5. Method according to any one of the preceding claims, wherein the first rolling phase is carried out at an initial rolling temperature of 1000°C to 1200°C.

6. Method according to any one of the preceding claims, wherein the final rolling temperature is lower, in particular at least 10°C lower, than the recrystallization stop temperature of the metallic base material layer.

7. Method according to any one of the preceding claims, wherein the cooling time period in air during the rolling process comprises 3 to 15 minutes.

8. Roll-bonded metal sheet, comprising:

a carbon steel as metallic base material layer and a metallic overlay material layer, which are bonded to each other by a metallurgical bond, wherein
the overlay material is a nickel-based material whose chemical composition, in %-by-weight, comprises

$58\% \le Ni \le 73\%$,
$20\% \le Cr \le 25\%$,

$0\% \leq Fe \leq 5\%,$
$0\% \leq C \leq 0.1\%,$
$0\% \leq Mn \leq 0.5\%,$
$0\% \leq Si \leq 0.5\%,$
$0\% \leq Co \leq 1\%,$
$0\% \leq Al \leq 0.4\%,$
$0\% \leq Ti \leq 0.4\%,$
$0\% \leq P \leq 0.015\%,$
$0\% \leq S \leq 0.015\%,$
$8\% \leq Mo \leq 10\%,$
$1.5\% \leq Nb + Ta \leq 2.8\%,$

the balance impurities, and selectively may additionally contain one or more of the following elements

$0\% \leq Ta \leq 1\%,$
$0\% \leq B \leq 0.008\%,$
$Cu \leq 0.5\%,$
$W \leq 1\%,$
$V \leq 0.5\%,$
$N \leq 0.05\%,$
$Mg \leq 0.05\%,$
$Ca \leq 0.05\%,$
$Pb \leq 0.002\%,$
$Zn \leq 0.002\%,$
$Sn \leq 0.002\%,$ and

obtainable by a thermomechanical rolling process with a first rolling phase for pre-rolling, a second rolling phase for final forming and a cooling time period lying between the first rolling phase and the second rolling phase, the final rolling temperature of the second rolling phase being set to a value equal to or less than 880°C, in particular 850°C.

9. Roll-bonded metal sheet of claim 8, wherein the cooling time period between the first rolling phase and the second rolling phase comprises accelerated cooling and/or heating of the metal sheet.

10. Roll-bonded metal sheet according to claim 8 or 9, wherein the metallic base material layer comprises a thickness equal to or greater than 25 mm, in particular equal to or greater than 30 mm or 35 mm.

11. Roll-bonded metal sheet according to any one of claims 8 to 10, wherein the metallic base material comprises a chemical composition according to one or more of the standards API 5L, in particular API 5L grade X65, DNV OS-F101, ISO 3183 or comparable standards.

12. Roll-bonded metal sheet according to any one of claims 8 to 11, wherein the metallic base material layer comprises a toughness corresponding to a notch impact energy of at least 50J at -70°C, in particular -80°C, and/or a ductile fraction ratio according to the Battelle Drop Weight Tear Test of at least 80% at -20°C, in particular -30°C.

13. Roll-bonded metal sheet according to any one of claims 8 to 12, wherein the metallic overlay material layer comprises a thickness equal to or greater than 2 mm, in particular equal to or greater than 2.5 mm.

**Revendications**

1. Procédé pour la fabrication d'une tôle plaquée par laminage, le procédé comprenant :

la mise en contact d'une couche de matériau de base métallique et d'une couche de matériau de placage métallique pour la génération d'un paquet de couches ;
le chauffage du paquet de couches ;
le laminage thermomécanique du paquet de couches chauffé, lequel comprend une première phase de laminage pour le prélaminage du paquet de couches chauffé avec formation d'une liaison métallurgique entre la couche de matériau de base métallique et la couche de matériau de placage métallique, une deuxième phase de laminage pour le façonnage final du paquet de couches ainsi qu'une période de refroidissement se situant entre la première phase de laminage et la deuxième phase de laminage ; le matériau de base étant un acier au carbone et

le matériau de placage étant un matériau à base de nickel, dont la composition chimique présente en % en masse

58 % ≤ Ni ≤ 73 %,
20 % ≤ Cr ≤ 25 %,
0 % ≤ Fe ≤ 5 %,
0 % ≤ C ≤ 0, 1 %,
0 % ≤ Mn ≤ 0,5 %,
0 % ≤ Si ≤ 0,5 %,
0 % ≤ Co ≤ 1 %,
0 % ≤ Al ≤ 0,4 %,
0 % ≤ Ti ≤ 0,4 %,
0 % ≤ P ≤ 0, 015 %,
0 % ≤ S ≤ 0, 015 %,
8 % ≤ Mo ≤ 10 %,
1,5 % ≤ Nb + Ta ≤ 2, 8 %,

le reste étant des impuretés, et peut éventuellement contenir de plus l'un ou plusieurs des éléments suivants

0 % ≤ Ta ≤ 1 %,
0 % ≤ B ≤ 0,008 %,
Cu ≤ 0,5 %,
W ≤ 1 %,
V ≤ 0,5 %,
N ≤ 0,05 %,
Mg ≤ 0,05 %,
Ca ≤ 0,05 %,
Pb ≤ 0,002 %,
Zn ≤ 0,002 %,
Sn ≤ 0,002 %,

et

la température de laminage de la deuxième phase de laminage étant ajustée à une valeur égale ou inférieure à 880 °C, en particulier 850 °C.

2. Procédé selon la revendication 1, la composition chimique du matériau de placage présentant une proportion en % en masse de Nb ≤ 2,5 % ou Nb + Ta ≤ 2,5 %.

3. Procédé selon la revendication 1 ou 2, le matériau de placage étant un alliage de nickel-chrome-molybdène-niobium.

4. Procédé selon l'une quelconque des revendications précédentes, l'acier au carbone présentant une composition chimique en % en masse comportant une ou plusieurs des plages 0 % ≤ C ≤ 0,30 % ou 0,16 %, 0 % ≤ Si ≤ 0,50 %, 1,10 % ≤ Mn ≤ 1,65 % ou 1,40 %, 0 % ≤ P ≤ 0,022 %, 0 % ≤ S ≤ 0,010 %, 0 % ≤ Nb ≤ 0, 05 %, 0 % ≤ Ti ≤ 0,06 %, 0 % ≤ V ≤ 0,10 %, le reste étant du fer et des impuretés.

5. Procédé selon l'une quelconque des revendications précédentes, la première phase de laminage étant mise en œuvre à une température de début de laminage de 1 000 °C à 1 200 °C.

6. Procédé selon l'une quelconque des revendications précédentes, la température finale de laminage étant plus basse, en particulier au moins 10 °C plus basse que la température d'arrêt de recristallisation de la couche de matériau de base métallique.

7. Procédé selon l'une quelconque des revendications précédentes, la durée de refroidissement à l'air pendant le processus de laminage comprenant 3 à 15 minutes.

8. Tôle plaquée par laminage, présentant :

un acier au carbone en tant que couche de matériau de base métallique et une couche de matériau de placage métallique, qui sont liés ensemble par le biais d'une liaison métallurgique, le matériau de placage étant un matériau à base de nickel dont la composition chimique présente en % en masse

58 % ≤ Ni ≤ 73 %,
20 % ≤ Cr ≤ 25 %,
0 % ≤ Fe ≤ 5 %,
0 % ≤ C ≤ 0,1 %,
0 % ≤ Mn ≤ 0,5 %,
0 % ≤ Si ≤ 0,5 %,
0 % ≤ Co ≤ 1 %,
0 % ≤ Al ≤ 0,4 %,
0 % ≤ Ti ≤ 0,4 %,
0 % ≤ P ≤ 0,015 %,
0 % ≤ S ≤ 0,015 %,
8 % ≤ Mo ≤ 10 %,
1,5 % ≤ Nb + Ta ≤ 2, 8 %,

le reste étant des impuretés, et peut éventuellement contenir de plus l'un ou plusieurs des éléments suivants

0 % ≤ Ta ≤ 1 %,
0 % ≤ B ≤ 0,008 %,
Cu ≤ 0,5 %,
W ≤ 1 %,
V ≤ 0,5 %,
N ≤ 0,05 %,
Mg ≤ 0,05 %,
Ca ≤ 0,05 %,
Pb ≤ 0,002 %,
Zn ≤ 0,002 %,
Sn ≤ 0,002 %,

et

pouvant être obtenue par un procédé de laminage thermomécanique comportant une première phase de laminage pour un prélaminage, une deuxième phase de laminage pour le façonnage final ainsi qu'une période de refroidissement se situant entre la première phase de laminage et la deuxième phase de laminage, la température finale de laminage de la deuxième phase de laminage étant ajustée à une valeur égale ou inférieure à 880 °C, en particulier 850 °C.

9. Tôle plaquée par laminage selon la revendication 8, la période de refroidissement se situant entre la première phase de laminage et la deuxième phase de laminage comprenant un refroidissement accéléré et/ou un chauffage de la tôle.

10. Tôle plaquée par laminage selon la revendication 8 ou 9, la couche de matériau de base métallique présentant une épaisseur égale ou supérieure à 25 mm, en particulier égale ou supérieure à 30 mm ou 35 mm.

11. Tôle plaquée par laminage selon l'une quelconque des revendications 8 à 10, le matériau de base métallique présentant une composition chimique correspondant à l'une ou plusieurs des normes parmi API 5L, en particulier API 5L qualité X65, DNV OS-F101, ISO 3183 et des normes comparables.

12. Tôle plaquée par laminage selon l'une quelconque des revendications 8 à 11, la couche de matériau de base métallique présentant une ductilité qui correspond à une résilience d'au moins 50 J à -70 °C, en particulier à -80 °C et/ou une fraction broyée selon le test de rupture par chute de poids Battelle d'au moins 80 % à -20 °C, en particulier à -30 °C.

13. Tôle plaquée par laminage selon l'une quelconque des revendications 8 à 12, la couche de matériau de placage métallique présentant une épaisseur égale ou supérieure à 2 mm, en particulier égale ou supérieure à 2,5 mm.

Fig. 1

Fig. 2

**Fig. 3**

**Fig. 4**

Fig. 5

Fig. 6

ASTM G 48 A

Fig. 7

Grüner Tod Test

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011079341 A2
- EP 0320773 A2
- DE 4409004 A1